# FASCICULE DE BREVET EUROPEEN

(11) **EP 3 440 152 B1**
(45) Date de publication et mention de la délivrance du brevet: **13.07.2022**
(21) Numéro de dépôt: 17704490.6
(22) Date de dépôt: 15.02.2017
(51) Int. Cl.: C09K 8/42, E21B 41/00, E21B 33/138, C09K 8/506, C09K 8/508, C04B 28/26

(54) **PROCEDE DE TRAITEMENT DES ABORDS D'UN PUITS AU MOYEN D'UNE SOLUTION AQUEUSE GELIFIANTE COMPRENANT UNE SOLUTION ALCALINE DE SILICATE DE POTASSIUM ET UN ACIDE ACETIQUE**
VERFAHREN ZUR BEHANDLUNG DES BEREICHS UM EIN BOHRLOCH UNTER VERWENDUNG EINER WÄSSRIGEN GELIERENDEN LÖSUNG MIT EINER ALKALI-KALIUM-SILIKAT-LÖSUNG UND EINER ESSIGSÄURE
METHOD FOR TREATING THE AREA SURROUNDING A WELL USING AN AQUEOUS GELLING SOLUTION COMPRISING AN ALKALINE POTASSIUM SILICATE SOLUTION AND AN ACETIC ACID

(30) Priorité: 04.04.2016 FR 1652923
(43) Date de publication de la demande: 13.02.2019
(73) Titulaire: IFP Energies nouvelles, 92852 Rueil-Malmaison (FR)
(72) Inventeur: SISSMANN, Olivier, 75005 Paris (FR); FLEURY, Marc, 78170 La Celle Saint Cloud (FR); CHARDIN, Michel, 92700 Colombes (FR)
(86) Numéro de dépôt international: PCT/EP2017/053372
(87) Numéro de publication internationale: WO 2017/174243

(56) Documents cités:
- WO-A1-2014/190226
- US-A- 4 438 976
- US-A- 5 067 416

## Description

La présente invention concerne le domaine du traitement des abords d'un puits au sein d'une formation souterraine, en particulier pour un puits de stockage géologique de gaz acides, par exemple le dioxyde de carbone CO₂. En particulier, l'invention concerne la fermeture de puits donnant accès aux formations géologiques dans lesquelles le stockage a lieu par injection. Un des objectifs est de prévenir les fuites, en particulier de gaz acides, par exemple de CO₂, par le puits ou son voisinage.

On connaît les procédures d'abandon de puits, dans lesquelles on introduit des bouchons de différentes qualités dans les cuvelages du puits : des bouchons mécaniques en matériau expansible, des bouchons de ciment, de résine. Cependant, la durabilité de ces matériaux, ainsi que celle du tube de cuvelage soumis à la corrosion, ne sont pas suffisantes dans le cas de stockage de gaz acides, notamment du CO₂.

On connaît aussi les injections sous pression ("squeeze") de produits spécifiques de colmatage par les perforations du puits afin d'obturer la formation poreuse et perméable. Cependant, on sait qu'il est difficile de maîtriser le placement de ces produits injectés, ce qui rend aléatoire l'efficacité du colmatage.

En outre, on connaît la demande de brevet WO 2010/007219 A1, qui décrit une méthode de traitements des abords de puits de stockage de gaz acide. Pour cette méthode, on injecte dans la roche un fluide de lavage, puis une solution réactive adaptée à réagir avec des gaz acides, cette solution réactive comporte des oxydes basiques. Toutefois, cette méthode propose l'utilisation de matériaux pouvant être onéreux, pouvant polluer la formation souterraine, et pouvant nécessiter une préparation spécifique pour notamment régler la viscosité. Le document WO2014/190226 décrit une composition et un procédé de fracturation de formations souterraines utilisant un silicate alcalin polymérisé en un gel de silice à l'aide d'un acide. Le gel de silice ainsi obtenu possède un pH d'environ 2 à moins de 7,5 et est injecté dans une formation souterraine. Le gel obtenu n'est pas injecté pour traiter les abords du puits. Le brevet US4 438 976 décrit une méthode pour colmater des fissures dans une formation souterraine, en deux injections successives, une première comprenant un acide et une deuxième comprenant une solution qui gélifie au contact de l'acide. Cette méthode ne permet pas l'injection d'une seule solution aqueuse gélifiante pour traiter les abords du puits, mais seulement le colmatage d'un passage du fluide au sein de la formation

Afin de pallier ces inconvénients, la présente invention concerne un procédé de traitement des abords d'un puits, dans lequel on prépare, puis on injecte dans une formation souterraine, une solution aqueuse gélifiante comprenant une solution alcaline de silicate de potassium et un acide acétique. Cette solution aqueuse gélifiante permet, grâce à ces propriétés gélifiantes, de colmater les abords du puits, tout en étant peu coûteuse et peu polluante.

### Le procédé selon l'invention

L'invention concerne un procédé de traitement des abords d'un puits au sein d'une formation souterraine. Pour ce procédé, on réalise les étapes suivantes :
a) on prépare une solution aqueuse gélifiante comprenant une solution alcaline de silicate de potassium et un acide acétique ; et
b) on injecte à partir dudit puits dans ladite formation souterraine ladite solution aqueuse gélifiante pour traiter, au sein de ladite formation souterraine, les abords dudit puits.

Avantageusement, on prépare une solution aqueuse gélifiante ayant une viscosité comprise entre 1 et 10 mPa.s.

De préférence, on prépare une solution aqueuse gélifiante ayant un temps de prise compris entre 3 et 20 heures.

Ladite solution alcaline de silicate de potassium comprend une concentration de silicium Si de 0,5 à 7 mol/L, de préférence de 0,5 à 3 mol/L. Ladite solution alcaline de silicate de potassium comprend un ratio molaire de dioxyde de silicium SiO₂ par rapport à l'oxyde de potassium K₂O compris entre 0,5 et 10, de préférence entre 1 et 5. Ladite solution aqueuse gélifiante comprend entre 1 et 30 % en poids d'acide acétique, de préférence entre 5 et 30 %.

De manière avantageuse, on injecte à partir dudit puits un fluide de lavage dans ladite formation souterraine préalablement à l'injection de ladite solution aqueuse gélifiante.

Conformément à une conception, ledit puits est un puits d'exploitation d'hydrocarbures de ladite formation souterraine, un puits de fracturation hydraulique, ou un puits de stockage, en particulier de stockage de gaz acide dans ladite formation souterraine.

Conformément à un mode de réalisation, on stocke ledit gaz acide préalablement à l'étape d'injection de ladite solution aqueuse gélifiante.

Alternativement, on colmate une performation et/ou au moins une fracture obtenue par fracturation, notamment, par fracturation hydraulique.

De plus, on peut boucher ledit puits après l'étape d'injection de ladite solution aqueuse gélifiante.

Selon une mise en œuvre, ladite formation souterraine comporte un pH environnant inférieur à 9.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1 illustre le procédé selon un premier mode de réalisation de l'invention.
La figure 2 illustre le procédé selon un deuxième mode de réalisation de l'invention.
La figure 3 illustre un schéma de montage expérimental pour tester une solution aqueuse gélifiante selon l'invention.
La figure 4 illustre, pour un exemple selon l'invention, l'évolution de la viscosité dynamique en fonction du temps.

### Description détaillée de l'invention

Le principe de l'invention repose sur la mise en place aux abords d'un puits, c'est-à-dire dans le voisinage du puits (en d'autres termes dans un rayon de quelques mètres autour du puits), le puits donnant accès entre la surface du sol et la formation souterraine, d'une solution permettant de limiter fortement la perméabilité de la roche du réservoir, et même de la colmater, dans ledit voisinage du puits. Ainsi, la solution injectée permet de limiter voire d'empêcher les fuites de fluides à travers le puit, et permet de former une couche protectrice pour les équipements de puits vis-à-vis des fluides, en particulier des éventuels gaz acides stockés. Il peut s'agir des fuites de gaz, notamment de gaz acides, des fuites de matières radioactives...

La présente invention concerne donc un procédé de traitement des abords de puits au sein d'une formation souterraine, pour lequel on réalise les étapes suivantes :
- on prépare, en surface, une solution aqueuse gélifiante comprenant une solution alcaline de silicate de potassium et un acide acétique,
- on injecte, à partir du puits, dans la formation souterraine, la solution aqueuse gélifiante pour traiter, au sein de la formation souterraine, les abords du puits.

Le procédé selon l'invention peut comporter plusieurs étapes successives, par exemple deux, d'injection de la solution aqueuse gélifiante.

Une telle solution aqueuse gélifiante est stable et inaltérable, notamment lorsque le pH environnant (de la formation souterraine) est inférieur à 9. C'est pourquoi, le procédé selon l'invention peut, de préférence, être mis en œuvre pour une formation souterraine ayant un pH inférieur à 9, ce qui est le cas en général.

Le terme gélifiant indique que la solution aqueuse est formulée sous forme d'un liquide non gélifié et peu visqueux, qui termine sa gélification une fois injectée dans la formation souterraine. La composition de la solution aqueuse gélifiante est donc choisie de manière à former un gel, à partir d'un temps suffisant long pour permettre le transport du liquide de la surface vers la formation souterraine. Ainsi, grâce à sa propriété gélifiante, la solution aqueuse peut remplir son rôle de limitation de perméabilité et de la porosité de la formation souterraine.

Une solution alcaline est une solution basique qui a un pH supérieur à 7.

On rappelle que la silice est très soluble dans les solutions alcalines, notamment dans les solutions alcalines de pH d'environ 10 et supérieur à 10. De plus, une baisse de pH provoque la précipitation de la silice contenue dans la solution alcaline : à partir d'une phase liquide dans laquelle la silice est sous une forme ionique, des oligomères se créent puis se condensent pour former un gel. Le gel a tendance à se fixer sur des surfaces minérales en formant des liaisons chimiques. Ainsi, dans une formation poreuse, l'injection de telles substances permet de réduire considérablement la perméabilité et la porosité, voire d'obstruer complètement le réseau poreux, après précipitation. En outre, les minéraux précipités par la solution aqueuse gélifiante forment aussi une couche protectrice pour les équipements de puits vis-à-vis des gaz acides stockés.

Il existe différentes formes de silicate : de sodium, potassium, lithium, etc. Le silicate de potassium est un silicate soluble dans l'eau, de formule générale K₂O₅Si₂. Ce silicate présente l'avantage de rendre la solution alcaline moins visqueuse que le silicate de sodium Na notamment. Ainsi, le silicate de potassium nécessite une dilution moindre, ce qui simplifie la préparation de la solution aqueuse gélifiante. De plus, étant donné que les solutions alcalines de silicate ne contiennent pas de particules, il n'y a pratiquement pas de limites d'injectivité par rapport à la taille des pores du milieu poreux de la formation souterraine. En particulier, on peut envisager l'injection d'une telle solution dans des milieux compacts présentant des seuils de pores nanométriques, améliorant ainsi encore leur capacité de barrière. En outre, la solution alcaline de silicate de potassium présente l'avantage d'être peu coûteuse, de l'ordre de quelques centaines d'Euros la tonne. Par exemple, le silicate de potassium peut être choisi par les produits commerciaux Betol K 35 T ^{®}, Betol K 48 T ^{®}, Betol K 54 T ^{®} ou Betol K 28 T ^{®} commercialisés par Woellner ^{®} (Allemagne). A titre d'exemple non limitatif, la composition des silicates de potassium Betol K 35 T ^{®} et Betol K 28 T ^{®} sont décrits dans le tableau 1. Dans ce tableau, la densité, sans unité, correspond à la masse volumique rapportée à celle de l'eau.

**Tableau 1 - Composition des silicates de potassium**

| Produit | SiO₂ % | K₂O % | SiO₂/K₂O | Viscosité (cP) | Densité | pH |
|---|---|---|---|---|---|---|
| Betol K 35 T ^{®} | 23.9 | 10.9 | 3.43 | 55 | 1.32 | 11 |
| Betol K 28 T ^{®} | 20.5 | 8.2 | 3.92 | 28 | 1.25 | 10.8 |

L'acide acétique, appelé également acide éthanoïque est un simple acide carboxylique avec une chaîne carbonée théorique en C₂, analogue à l'éthane, de masse molaire 60 g/mol et de formule chimique brute C₂H₄O₂ ou développée CH₃COOH. Le vinaigre est un exemple de solution d'acide acétique : il peut s'agir d'un mélange d'eau et d'acide acétique. L'acide acétique présente l'avantage, contrairement à d'autres acides, de ne pas être polluant ou dangereux, que ce soit lors de sa préparation, ou injecté dans la formation souterraine.

Selon un mode de réalisation de l'invention, la composition de la solution aqueuse gélifiante est déterminée essentiellement en fonction de la température de la formation souterraine. Par exemple, lors de la préparation, on peut modifier les proportions d'eau et d'acide pour adapter le temps de gélification tout en restant peu visqueux. En effet, les contraintes habituelles principales pour l'injection de solutions dans une formation souterraine sont les suivantes :
- une viscosité modérée de telle sorte que les pressions d'injection se situent bien en dessous des pressions de fracturation de la formation, avantageusement, la viscosité de la solution aqueuse gélifiante peut être comprise entre 1 et 10 mPa.s, et
- un temps de prise, appelé aussi temps de gélification, (c'est-à-dire le temps nécessaire entre la préparation de la solution et sa gélification) suffisant pour permettre l'injection de la solution lorsqu'elle est préparée en surface, puis injectée dans la formation, avantageusement, le temps de prise peut être compris entre 3 et 20 heures.

Selon une mise en œuvre de l'invention, l'acide acétique peut avoir une concentration comprise entre 0,1 et 5 mol/L, de préférence entre 0,5 et 2 mol/L. Cette gamme de concentration permet notamment de préparer la solution gélifiante sans risque de générer des agrégats et une solution non homogène. Par exemple, l'acide acétique peut avoir une concentration sensiblement égale à 1 mol/L, c'est-à-dire une concentration sensiblement identique à celle d'un vinaigre. C'est la concentration d'acide pur dans la solution gélifiante qui permet de régler le temps de gélification. Ainsi, on peut diluer la solution initiale de silicate avec une plus grande quantité d'eau si un acide plus concentré est utilisé.

Conformément à l'invention, la solution alcaline de silicate de potassium comprend une concentration de silicium Si comprise de 0,5 à 7 mol/L, de préférence de 0,5 à 3 mol/L. Cette gamme de concentration permet notamment d'obtenir des gels irréversibles stables. Par exemple, la solution alcaline de silicate de potassium commerciale peut comprendre une concentration de silicium comprise entre 4 et 5 mol/L, sensiblement égale à 4,7 mol/L. Elle peut être alors diluée avec de l'eau pour atteindre une concentration comprise entre 0,5 et 3 mol/L, sensiblement égale à 1,8 mol/L. Cette dilution fait également diminuer la viscosité de la solution vers des valeurs voisines de celle de l'eau pure.

Selon une caractéristique de l'invention, la solution alcaline de silicate de potassium comprend un ratio molaire (SiO₂/K₂O) de dioxyde de silicium SiO₂ par rapport à l'oxyde de potassium K₂O compris entre 0,5 et 10, de préférence entre 1 et 5. Par exemple, la solution alcaline de silicate de potassium peut comprendre un ratio molaire de dioxyde de silicium SiO₂ par rapport à l'oxyde de potassium K₂O sensiblement égal à 4.

La solution aqueuse gélifiante comprend entre 1 et 30 % en poids d'acide acétique, de préférence entre 10 et 20 % en poids d'acide acétique. Ainsi, il est possible de régler le pH de la solution aqueuse gélifiante. Par exemple, la solution aqueuse gélifiante peut comprendre sensiblement 16 % en poids d'acide acétique.

Lorsque cela est utile, et en particulier lorsque la température de la formation visée est élevée, on peut encore augmenter le temps de gélification en utilisant un autre acide faible, tel que l'acide borique, ou encore en utilisant des solutions aqueuses concentrées en certains cations métalliques, telle qu'une solution d'hydroxyde d'aluminium. De manière générale, ces ions métalliques viennent se substituer partiellement au silicium dans la structure du tétraèdre de silice afin de ralentir les mécanismes de polymérisation et de condensation, augmentant les temps de gélification. La solution aqueuse gélifiante peut comprendre tout autre composé permettant notamment son adaptation à la formation souterraine.

Pour colmater une formation poreuse autour d'un puits, on peut opérer de la manière suivante :
- on prépare, en surface, une solution aqueuse gélifiante à partir d'une solution alcaline de silicate de potassium, d'eau et d'acide acétique. De préférence, ces mélanges sont réalisés graduellement pour éviter une précipitation locale due à une concentration excessive localisée. De tels dispositifs de mélange graduel sont disponibles de manière courante, par exemple pour la préparation de gels à partir de polymères. A des températures de surface inférieures à la température prévue dans la formation souterraine (par exemple 20°C par rapport à 40 °C), la cinétique de gélification est fortement ralentie, augmentant d'autant le temps disponible pour effectuer les mélanges,
- on injecte le mélange gélifiant (la solution aqueuse gélifiante) dans la formation, en particulier par des moyens de pompage classique ; à l'amont du volume injecté (fluide contenu dans le puits), on peut utiliser de l'eau sans provoquer de précipitation. A l'aval du volume injecté, on peut, de manière identique, utiliser de l'eau.

Un ordre de grandeur du temps de gélification de la solution aqueuse gélifiante à 40°C peut être d'environ 500 min soit 8.5 h. Cet ordre de grandeur est suffisant pour permettre de placer la solution aqueuse gélifiante dans la formation poreuse avant gélification. Par exemple, pour un volume poreux d'environ 10 m⁻³ dans un rayon de 1 m autour d'un puits et sur une hauteur de 10 m avec une porosité de 30% - en utilisant un débit de pompage typique de 10 m³/h, le temps d'injection nécessaire de la solution aqueuse gélifiante est de 1 heure. A cela, il faut rajouter le temps de déplacement de la solution dans le puits qui peut durer environ 3 heures suivant la technique employée et le diamètre du tube d'injection.

Afin de laver, au sein de la formation souterraine, les abords du puits, le procédé peut comprendre une étape d'injection d'un fluide de lavage, notamment de l'eau, préalablement à l'injection de la solution aqueuse gélifiante. De plus, le fluide de lavage peut contenir des additifs visco-sifiants pour améliorer le lavage.

Dans le cas d'un puits de stockage de gaz acides, le volume du fluide de lavage injecté est de préférence suffisant pour repousser le gaz acide à une distance radiale d'au moins quelques mètres des abords du puits. Ce rinçage, préférentiellement à l'eau, assure par la suite une bonne injectivité de la formulation comprenant le matériau réactif aux abords du puits. En l'absence de rinçage la méthode pourrait être moins efficace car il y a un risque de former rapidement des composés minéraux (carbonates et/ou sulfures) superficiels entraînant localement un bouchage de la porosité qui limiterait l'envahissement des abords de puits par la formulation réactive.

Le procédé peut comprendre, en outre, une étape de bouchage de puits après injection de la solution aqueuse gélifiante.

Par exemple, l'opération peut se terminer par l'injection d'un bouchon de ciment, ou toute autre formulation colmatante, pour maintenir le matériau réactif en place. Cette première opération terminée, il est possible de procéder à la même opération dans d'autres zones, en particulier au toit du réservoir après perforation du cuvelage et de la cimentation primaire de façon à permettre l'injection.

Le procédé selon l'invention peut être appliqué à un puits de stockage de gaz acides dans la formation souterraine. Il peut être également appliqué à un puits d'exploitation ou d'exploration d'une formation souterraine comprenant des hydrocarbures. Il peut être également appliqué à un puits utilisé pour la récupération d'hydrocarbures par fracturation, notamment par fracturation hydraulique. Dans ce cas, la solution aqueuse gélifiante permet le colmatage de la perforation et/ou des fractures formées pour le procédé. Alternativement, il peut être appliqué à tout type de stockage dans une formation souterraine, par exemple pour le stockage de matières radioactives. Pour toutes les applications, le procédé selon l'invention permet notamment de limiter les fuites de gaz à travers le puits.

L'invention s'applique en premier lieu à la fermeture d'un puits injecteur que l'on a décidé de ne plus utiliser, ce que l'on peut assimiler à l'abandon d'un puits pétrolier. Mais l'invention peut également être mise en œuvre lors de la construction d'un puits spécifiquement foré pour le stockage géologique des gaz acides, qu'il ait lieu dans des roches réservoirs, des aquifères, ou des veines de charbon.

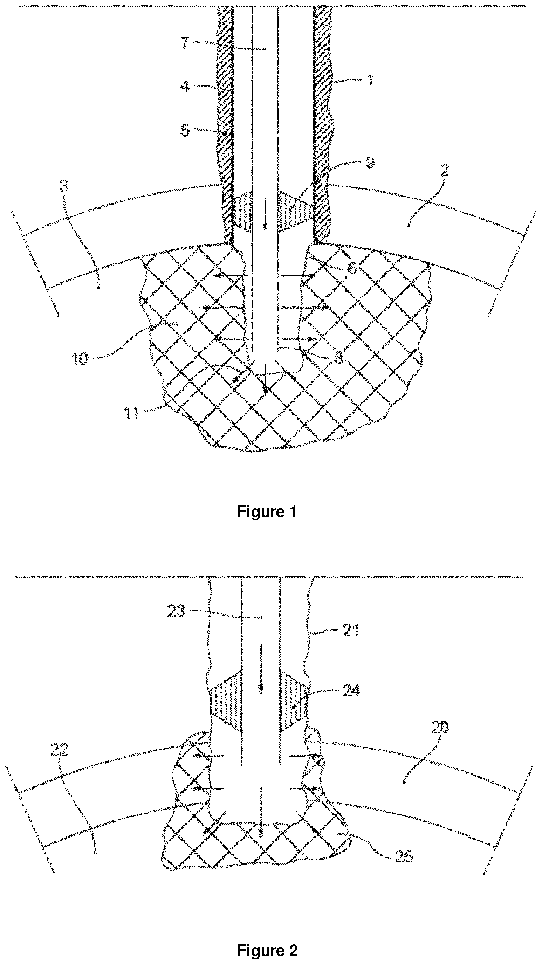

Les figures 1 et 2 illustrent le procédé selon l'invention, dans le cas de l'injection de gaz acides dans une formation souterraine. Toutefois, la réalisation est sensiblement identique pour les autres applications envisagées.

La figure 1 montre un forage 1 exécuté à travers la roche couverture 2 qui surmonte la roche réservoir 3. Le forage 1 est cuvelé par un tube 4 cimenté dans le trou foré 1 par un matériau de cimentation 5. L'accès au réservoir est obtenu par un drain foré 6. Un tube d'injection 7 se terminant par une crépine 8 est descendu dans le puits et l'annulaire entre ledit tube d'injection et le cuvelage 4 est obturé par des éléments d'étanchéité de type "packer" 9, ou équivalents, bien connus dans la profession.

Le schéma de la figure 1 montre un exemple d'équipement de puits, nullement limitatif, d'autres variantes sont applicables à la présente invention, en particulier les "complétions" ou équipements de puits, pour des puits horizontaux.

L'injection de gaz acide est effectuée par l'intermédiaire du tube 7. Une fois le remplissage du réservoir achevé, on peut effectuer un lavage pour repousser le dioxyde de carbone CO₂, ou le sulfure d'hydrogène H₂S, de la zone 10 que l'on souhaite traiter. On utilise de préférence de l'eau, mais d'autres fluides peuvent être utilisés pour ce lavage dans la mesure où ils réalisent les fonctions équivalentes à celles de l'eau. Par exemple, on peut ajouter des additifs viscosifiants pour améliorer le lavage.

Après le lavage, une solution aqueuse gélifiante est alors injectée aux abords du puits et dans un rayon de quelques mètres. Les flèches 11 schématisent ladite injection.

Lorsque le gaz acide a tendance à retourner vers le puits, ces bases réagissent avec le gaz acide provenant du stockage, et vont minéraliser ce dernier dans les pores des milieux poreux aux abords du puits sous forme de carbonates, ou d'hydrogéno-carbonates, dans le cas du CO₂, et sous forme de sulfures dans le cas de l'H₂S, réduisant de cette manière la porosité et la perméabilité des abords de puits, et diminuant donc le débit de fuite potentiel de gaz acide vers la surface en passant par le puits. Les minéraux précipités forment aussi une couche protectrice pour les équipements de puits vis-à-vis des gaz acides stockés.

L'invention s'applique également lors du forage d'un nouveau puits en vue d'y injecter des gaz acides à stocker. Dans ce cas, une fois la roche couverture du réservoir atteinte et traversée par le forage, on applique alors la méthode précédemment décrite. La figure 2 montre un forage 21 qui a atteint la roche couverture 20, surmontant le réservoir de stockage 22. On effectue un "flush" (lavage) à l'eau, puis l'injection, juste au-dessous du niveau de la couverture (au toit du réservoir), d'une formulation gélifiante. Pour cela, on utilise une garniture de tubes 23, et un packer d'isolation de l'annulaire 24. La zone 25 est ainsi envahie d'un matériau réactif qui peut réagir en cas de fuite de gaz acide dans ladite zone. On poursuit le forage avec le fluide de forage jusqu'à la profondeur désirée, puis on procède au cuvelage et à la cimentation, puis aux perforations nécessaires à l'injection ultérieure du/des gaz acide(s). Cette méthode préventive, réalisée en amont de l'injection de CO₂, permet de limiter les risques de fuites au niveau de la couverture, là où le panache de CO₂ pourrait s'accumuler pendant et après l'injection, en diminuant fortement la perméabilité de la roche réservoir juste au-dessous de la couverture argileuse. Lors de la fermeture pour abandon de ce puits, la procédure décrite ci-dessus est mise en œuvre.

### Exemple

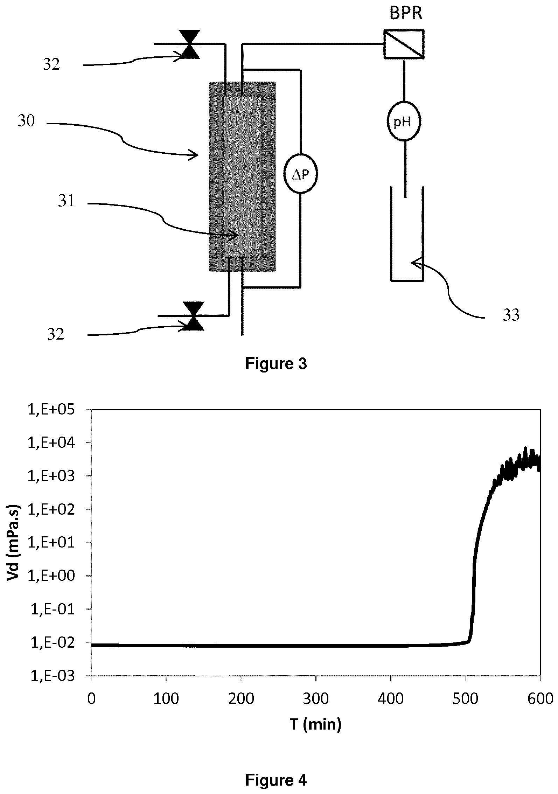

Les solutions aqueuses gélifiantes décrites plus haut permettent de colmater un milieu poreux. Des tests ont été effectués avec un dispositif classique permettant de mesurer la perméabilité de milieux poreux (figure 3). Le dispositif de mesure comporte une cellule 30 comprenant un échantillon 31 du milieu poreux. Dans l'échantillon 31 on injecte la solution aqueuse gélifiante par la ligne de puis un réservoir 33, au moyen d'une vanne de régulation de pression BPR. Le dispositif de mesure comprend en outre un moyen de mesure de différence de pression ΔP entre l'entrée et la sortie de la cellule 30, et un moyen de mesure du pH de la solution aqueuse gélifiante. De plus, le dispositif de mesure permet en plus de rincer les connexions et les faces avales et amonts d'injection au moyen des purges 32. Ainsi, seul le colmatage dans le milieu poreux est mesuré, et non pas le bouchage des connexions.

Le milieu poreux utilisé est un échantillon représentatif d'une formation gréseuse de bonne porosité (24,5%) et de perméabilité moyenne (62 mD, soit 612. 10⁻¹⁰ m²), mais le test serait identique pour tout autre milieu. Après avoir mesuré la perméabilité à l'eau du milieu poreux, la solution aqueuse gélifiante (solution alcaline de silicate de potassium + eau + acide acétique) est injectée dans le milieu poreux. A l'aide du pH-mètre placé en sortie, on vérifie la bonne saturation du milieu poreux en mesurant une valeur identique de pH en sortie par rapport à la solution injectée. Puis, on rince à l'eau douce les connexions et les embouts d'injection, et on attend la gélification de la solution, l'ensemble étant placé à une température régulée stable en étuve (par exemple 40°C).

Pour ces tests, la solution aqueuse gélifiante comporte :
- une solution alcaline de silicate de potassium industrielle (Betol K 28 T ^{®} commercialisés par Woellner ^{®} (Allemagne)) avec une concentration en Silicium [Si]= 4,7 mol/l et un ratio molaire SiO₂/K₂O=3,92,
- de l'eau, de telle sorte que la solution alcaline de silicate de potassium est diluée avec 50% poids d'eau,
- puis, 15,7% poids d'acide acétique, de concentration 1 mol/L est ajouté à la solution.

La figure 4 illustre l'évolution de la viscosité dynamique Vd (en mPa.s) de cette solution aqueuse gélifiante en fonction du temps T (en min). Pour cela, la solution gélifiante a été placée dans un rhéomètre classique comprenant une plaque plane à température régulée (40°C) et un cône oscillant placé au-dessus, et osc illant avec une amplitude faible d'une dizaine de degré de manière à ne pas cisailler en permanence le liquide, ce qui pourrait modifier son comportement. On mesure alors la force nécessaire pour effectuer cette oscillation et on peut ainsi en déduire la viscosité. Lorsque la solution gélifie, l'oscillation est fortement diminuée, ce qui permet de déterminer le temps de gélification. Pour cette solution, on observe que la viscosité reste identique pendant 500 minutes, puis augmente brutalement, ce qui correspond à la gélification de la solution. Visuellement et à 40°C également, la solution reste claire et transparente immédiatement après mélange. Puis graduellement, la solution devient translucide tout en restant fluide. Après 40 h, le gel formé ne coule plus lorsque le récipient (dans lequel le mélange a été initialement placé) est retourné.

En utilisant, dans le dispositif de mesure, cette formulation de la solution aqueuse gélifiante avec une proportion d'acide acétique de 15,7% et après une attente de 90h, la pression d'injection nécessaire pour obtenir la rupture du gel est de 19,5 bar (1,95MPa) pour 3 cm de carotte. Ainsi, on peut estimer le colmatage à environ 600 bar/m, soit 60 MPa/m.. En dessous de cette pression, l'eau ne peut pas traverser le milieu poreux. Des essais similaires ont montré qu'en présence d'un gaz acide tel que le CO2, les mêmes pressions de colmatage sont obtenues. Une fois la rupture du gel effectuée en appliquant une pression supérieure à 19,5 bar (1,95 MPa) dans le cas présent, une perméabilité de 6 mD (59.10⁻¹⁰ m²) est mesurée, alors que la perméabilité initiale du milieu poreux était de 62 mD (612. 10⁻¹⁰ m²), soit une diminution d'un facteur dix. Ceci montre qu'après rupture, le réseau poreux est modifié de manière permanente. Pour augmenter encore la pression de rupture et/ou diminuer encore la perméabilité, une seconde injection peut être effectuée.

## Revendications

1. Procédé de traitement des abords d'un puits au sein d'une formation souterraine, **caractérisé en ce qu'**on réalise les étapes suivantes :
a) on prépare en surface une solution aqueuse gélifiante comprenant une solution alcaline de silicate de potassium et entre 1 et 30 % en poids d'acide acétique, de préférence entre 5 et 30 %, ladite solution alcaline de silicate de potassium comprenant une concentration de silicium Si de 0,5 à 7 mol/L, de préférence de 0,5 à 3 mol/L et un ratio molaire de dioxyde de silicium SiO₂ par rapport à l'oxyde de potassium K₂O compris entre 0,5 et 10, de préférence entre 1 et 5
; et
b) on injecte à partir dudit puits dans ladite formation souterraine ladite solution aqueuse gélifiante pour traiter, au sein de ladite formation souterraine, les abords dudit puits.

2. Procédé selon la revendication 1, dans lequel on prépare une solution aqueuse gélifiante ayant une viscosité comprise entre 1 et 10 mPa.s.

3. Procédé selon l'une des revendications précédentes, dans lequel on prépare une solution aqueuse gélifiante ayant un temps de prise compris entre 3 et 20 heures.

4. Procédé selon l'une des revendications précédentes, dans lequel on injecte à partir dudit puits un fluide de lavage dans ladite formation souterraine préalablement à l'injection de ladite solution aqueuse gélifiante.

5. Procédé selon l'une des revendications précédentes, dans lequel ledit puits est un puits d'exploitation d'hydrocarbures de ladite formation souterraine, un puits de fracturation hydraulique, ou un puits de stockage, en particulier de stockage de gaz acide dans ladite formation souterraine.

6. Procédé selon la revendication 5, dans lequel on stocke ledit gaz acide préalablement à l'étape d'injection de ladite solution aqueuse gélifiante.

7. Procédé selon la revendication 5, dans lequel on colmate une performation et/ou au moins une fracture obtenue par fracturation, notamment, par fracturation hydraulique.

8. Procédé selon l'une des revendications précédentes, dans lequel on bouche ledit puits après l'étape d'injection de ladite solution aqueuse gélifiante.

9. Procédé selon l'une des revendications précédentes, dans lequel ladite formation souterraine comporte un pH environnant inférieur à 9.

## Patentansprüche

1. Verfahren zur Behandlung der Umgebung eines Bohrlochs in einer unterirdischen Formation, **dadurch gekennzeichnet, dass** die folgenden Schritte durchgeführt werden:
a) Herstellen, an der Oberfläche, einer gelbildenden wässrigen Lösung, die eine alkalische Kaliumsilikatlösung und zwischen 1 und 30 Gewichts-% an Essigsäure, vorzugsweise zwischen 5 und 30 %, umfasst, wobei die alkalische Kaliumsilikatlösung eine Konzentration an Silicium Si von 0,5 bis 7 mol/L, vorzugsweise von 0,5 bis 3 mol/L, umfasst und das Molverhältnis von Siliciumdioxid SiO₂ zu Kaliumoxid K₂O im Bereich von 0,5 bis 10, vorzugsweise von 1 bis 5, liegt;
und
b) Einleiten der gelbildenden wässrigen Lösung ausgehend von dem Bohrloch in die unterirdische Formation, um innerhalb der unterirdischen Formation die Umgebung des Bohrlochs zu behandeln.

2. Verfahren nach Anspruch 1, wobei eine gelbildende wässrige Lösung mit einer Viskosität im Bereich von 1 bis 10 mPa.s hergestellt wird.

3. Verfahren nach einem der vorhergehenden Ansprüche, wobei eine gelbildende wässrige Lösung mit einer Abbindungszeit im Bereich von 3 bis 20 Stunden hergestellt wird.

4. Verfahren nach einem der vorhergehenden Ansprüche, wobei ausgehend von dem Bohrloch eine Spülflüssigkeit in die unterirdische Formation eingeleitet wird, bevor die Einleitung der gelbildenden wässrigen Lösung erfolgt.

5. Verfahren nach einem der vorhergehenden Ansprüche, wobei es sich bei dem Bohrloch um ein Bohrloch zur Förderung von Kohlenwasserstoffen der unterirdischen Formation, ein Bohrloch zur hydraulischen Frakturierung oder ein Bohrloch zur Speicherung, insbesondere zur Speicherung von saurem Gas in der unterirdischen Formation, handelt.

6. Verfahren nach Anspruch 5, wobei die Speicherung des sauren Gases im Vorfeld des Schrittes des Einleitens der gelbildenden wässrigen Lösung erfolgt.

7. Verfahren nach Anspruch 5, wobei eine Performation und/oder mindestens eine Bruchlinie abgedichtet wird, welche durch Frakturierung, insbesondere durch hydraulische Frakturierung, erzeugt wurde.

8. Verfahren nach einem der vorhergehenden Ansprüche, wobei das Bohrloch nach dem Schritt des Einleitens der gelbildenden wässrigen Lösung fest verschlossen wird.

9. Verfahren nach einem der vorhergehenden Ansprüche, wobei die unterirdische Formation einen UmgebungspH-Wert von weniger als 9 aufweist.

## Claims

1. Process for the treatment of the area surrounding a well within a subterranean formation, **characterized in that** the following stages are carried out:
a) an aqueous gelling solution comprising an alkaline potassium silicate solution and between 1% and 30%, preferably between 5% and 30%, by weight of acetic acid is prepared at the surface, said alkaline potassium silicate solution comprising a concentration of silicon Si of from 0.5 to 7 mol/l, preferably of from 0.5 to 3 mol/l, and a molar ratio of silicon dioxide SiO₂, with respect to the potassium oxide K₂O, of between 0.5 and 10, preferably between 1 and 5;
and
b) said aqueous gelling solution is injected, from said well into said subterranean formation, in order to treat, within said subterranean formation, the area surrounding said well.

2. Process according to Claim 1, in which an aqueous gelling solution having a viscosity of between 1 and 10 mPa.s is prepared.

3. Process according to either of the preceding claims, in which an aqueous gelling solution having a setting time of between 3 and 20 hours is prepared.

4. Process according to one of the preceding claims, in which a flushing fluid is injected, from said well, into said subterranean formation prior to the injection of said aqueous gelling solution.

5. Process according to one of the preceding claims, in which said well is a well for the extraction of hydrocarbons from said subterranean formation, the hydraulic fracturing well or a storage well, in particular a well for the storage of acid gas in said subterranean formation.

6. Process according to Claim 5, in which said acid gas is stored prior to the stage of injection of said aqueous gelling solution.

7. Process according to Claim 5, in which a perforation and/or at least one fracture obtained by fracturing, in particular by hydraulic fracturing, is blocked.

8. Process according to one of the preceding claims, in which said well is plugged after the stage of injection of said aqueous gelling solution.

9. Process according to one of the preceding claims, in which said subterranean formation comprises a surrounding pH of less than 9.
